# EUROPEAN PATENT APPLICATION

(11) **EP 2 489 593 A1**
(43) Date of publication of application: **22.08.2012**
(21) Application number: 11155264.2
(22) Date of filing: 21.02.2011
(51) Int. Cl.: B64G 1/10, B64G 1/44, B64G 1/50, B64G 1/40, B64G 1/64

(54) **Earth observation satellite, satellite system, and launching system for launching satellites**

(71) Applicant: EUROPEAN SPACE AGENCY, 75738 Paris Cédex 15 (FR)
(72) Inventor: Martinez, Miguel Aguirre, 28006 Madrid (ES)
(74) Representative: MERH-IP Matias Erny Reichl Hoffmann

(57) **Abstract**

The present invention relates to an Earth observation satellite 100 comprising a satellite main body 10 having an elongated shape extending in the direction of a roll axis R of the satellite 100 from a first base face 11 of the satellite main body 10 to a second base face 12 of the satellite main body 10, the satellite main body 10 having a plurality of lateral faces extending from the first base face 11 to the second base face 12; a solar array 20; and propulsion means 32 for compensating air-drag being arranged on the base face 12 of the satellite main body 10. A first solar panel 21 of the solar array 20 is mounted on a first lateral face 13 of the satellite main body 10, a second lateral face 14 of the satellite main body 10 is configured to radiate heat away from the satellite main body 10, and a third lateral face 15 of the satellite main body 10 has observation means for Earth observations.

## Description

### Field of the Invention

The present invention relates to an Earth observation satellite comprising a satellite main body and a solar array, wherein a solar panel of the solar array and observation means for Earth observations are mounted on the satellite main body. The observation means may, for example, comprise a Synthetic Aperture Radar (SAR) observation device and/or a high-resolution optical observation device.

Furthermore, the present invention relates to a satellite system comprising a plurality of the above-mentioned Earth observation satellites, in particular, a satellite system in which the satellites are orbiting Earth in one or more Low Earth Orbits (LEO).

Furthermore, the present invention relates to a launching system for launching satellites into one or more Earth orbits, comprising a launching space vehicle and a plurality of the above-mentioned Earth observation satellites being accommodated in the launching space vehicle.

### Background of the Invention

Earth Observation (EO) using satellites covers a wide field of remote sensing techniques. The first Earth observing instruments carried by satellites were film cameras looking to the Earth. For example, the US Explorer-6 acquired the first Earth images in August 1959. Since then, the main driver behind Security and Defence Earth Observation has been to obtain images with high space resolution to detect, monitor and characterize possible threads.

In addition, Low Earth Orbit Meteorological EO started also in the USA. For example, the satellite TIROS-01 provided images of the Earth and of the atmosphere using a TV camera already in 1960. Tiros-8 in 1963 was the first satellite delivering to ground real-time images using standard image reception and processing equipment. Besides the resolution of these systems being coarse, they opened the path towards operational, i.e. regular and reliable, Earth Observation. The satellite ITOS (Improved Tiros Operational Program) was launched in 1970 starting fully operational Earth Observation. The main driver behind Operational Meteorology has been fast revisit to characterize properly weather, which is a highly dynamic process. Nevertheless, meteorology can tolerate modest to coarse space resolutions.

The evolution of environmental or security threads or crisis can be very dynamic. Security threads can also be small and they may change their locations dynamically. A space based observing system for crisis detection, monitoring and characterization shall provide at the same time high space resolution and frequent refreshing of the information acquired, i.e. fast revisit. To be able to fulfil both needs at the same time has been exceedingly complex and expensive. The operational delivery of space mission products needs heavy long-term infrastructure investment and maintenance costs.

ESA is currently directing a study on "The Security of GMES: Preliminary Investigation on Space Infrastructure Concepts of Operation". Preliminary research on user's needs asks for high resolution in the sub-meter domain, i.e., at high spatial resolutions below 1m, and sub-day revisit, i.e., fast revisit times of below 24h, preferably even below 12h, and this at the same time within one satellite system concept.

On the one hand, high-resolution information is fundamental for the detection and monitoring of small objects or events. Regarding the general requirement of high spatial resolution in Earth observations, Earth observation satellite systems providing high spatial resolution generally require large aperture and/or large focal length and thus require large size observation instruments such as e.g. large size optical telescopes or large size SAR arrays.

Such large instrument system requirements generally lead to heavy instruments and thus heavy satellites also cause higher costs. It should be noted that the relationship between the required instrument size and obtained resolution is directly depending of the satellite flying altitude, namely, higher altitudes require larger instruments for a certain spatial resolution. Known high-spatial-resolution-Earth-observation-systems are in general using Low Earth Orbits (LEOs) of altitudes of above 500 to 900 km. Altitudes below 500 km are generally considered very impractical and inefficient since such very low orbits generally need very expensive and heavy satellite concepts including large propulsion devices and large fuel storage devices carrying a large amount of fuel for orbit maintenance (e.g. against the increasing air-drag occurring at lower altitudes) and for manoeuvring (e.g. such as roll and/or pitch maneuvering required for increasing the observable angle).

On the other hand, fast revisit information is a very important requirement for the observation of fast-changing dynamic events, e.g., for the observations of natural or man-made crisis situations as dynamic events such as war, humanitarian refugee situations, floods or Earthquakes. The monitoring and prediction of atmospheric weather also requires fast revisit to feed the atmospheric dynamic models with data fast enough to provide reliable weather predictions.

In general, fast revisit at an observed area or object may be achieved by providing satellite systems with a higher number of satellites which are distributed in several orbital planes. Such systems generally have the significant drawback that they are limited by the high costs necessary to implement and launch those constellations having large numbers of satellites distributed in several orbits and/or orbital planes. Affordable constellations of many satellites can be implemented only if the satellite were small but small satellites are limited on terms of instrument aperture and resolution as mentioned above.

Summarizing, the first requirement of high spatial resolution in Earth observations generally leads to large instrument size, heavy satellite concepts, and high costs. On the other hand, the second requirement of fast revisit requires a high number of satellites which leads to even higher costs which can be made affordable by making the single satellites smaller leading to smaller instrument size and thus limits the obtainable spatial resolution in contradiction with the first requirement. Accordingly, in view of the above, this invention is particularly prompted by the need to provide an Earth observation satellite system concept that is able to provide at the same time high space resolution and fast revisit at affordable cost.

### Summary of the Invention

In view of the above, it is an object of the present invention to provide an improved Earth observation satellite concept and an improved Earth observation system concept which provide fast, efficient and reliable Earth observation capabilities, in particular, which provide, at lowered costs and at the same time, high spatial resolution capabilities and fast revisit capabilities.

For solving the above-mentioned object of the present invention, there is proposed an Earth observation satellite according to independent claim 1, a satellite system according to independent claim 17, and a launching system according to independent claim 19. The dependent claims relate to preferred aspects of the present invention.

According to a first aspect of the present invention, an Earth observation satellite comprises a satellite main body and a solar array. The satellite main body has an elongated shape extending in the direction of a roll axis of the satellite from a first base face of the satellite main body to a second base face of the satellite main body. Furthermore, the satellite main body has a plurality of lateral faces extending from the first base face to the second base face, wherein the lateral faces extend in the direction of a roll axis of the satellite, in particular in parallel with the roll axis of the satellite. The first and/or second base faces may be oriented orthogonal to the roll axis of the satellite. Arranged on the first base face of the satellite main body, there is provided a first propulsion means for compensating air-drag being arranged on the first base face.

Elongated shape may particularly mean that a dimensional extension of the satellite main body in the direction of the roll axis is preferably at least twice as large as -even more preferably at least three times larger than - the maximal dimensional extension in a direction being perpendicular to the roll axis.

According to this first aspect of the present invention, a first solar panel of the solar array is mounted on a first lateral face of the satellite main body, a second lateral face of the satellite main body is configured to radiate heat away from the satellite main body, and a third lateral face of the satellite main body has observation means for Earth observations.

Summarizing the above-mentioned first aspect of the present invention, there is provided a slender shaped satellite having a slender shaped, elongated main body which extends from the first base face to the second base face in the direction of the roll axis of the satellite. That is, due to the elongated shape, the first and second base faces of the satellite main body are small relative to the overall lateral face of the satellite main body.

Accordingly, when seen from the direction of the roll axis, the cross-section of the satellite main body is small relative to the overall size of the satellite main body so that air-drag can be advantageously reduced while still allowing the satellite main body to accommodate larger elongated instruments such as optical telescopes or SAR instruments. Due to the reduced air-drag caused by the relatively small cross-section of the satellite main body, when seen from the direction of the roll axis, the satellite can still be efficiently operated in Low Earth Orbits, even in Low Earth Orbits below 500 km without requiring large and heavy propulsion means and large and heavy fuel accommodation devices such as large fuel tanks. In order to nevertheless allow for orbit maintenance even in Low Earth Orbits below 500 km, there is provided propulsion means on at least one of the base faces which can compensate the small remaining air-drag for maintaining the orbital altitude.

In the above, it should be noted the term "roll axis" shall refer to a reference axis direction of the satellite which is directed in - or at least substantially directed in - the velocity direction of the satellite when the satellite is orbiting Earth. That is, the term "roll axis" is used throughout this document similar to the term "roll axis" as known from the field of aviation, where there are defined three principal axes (or reference axes) for an air plane which are perpendicular to each other: the roll axis (directed in parallel with the direction of flight in nominal flying orientation), the yaw axis (perpendicular to the roll axis and directed towards the surface of the Earth in nominal horizontal flying orientation), and the pitch axis (perpendicular to the roll axis and perpendicular to the yaw axis, i.e., the pitch axis is oriented in parallel with the plane of the air plane wings).

Moreover, the above described features of the present invention allow to provide three lateral faces, which can advantageously be made larger than the base faces due to the slender shaped satellite having a slender shaped, elongated main body, so that there can be used three lateral faces for the main functions and functional requirements of the satellite. Namely, there can be conveniently provided at least one lateral face having Earth observation means to be provided on the lateral face side of the satellite main body facing Earth when the satellite is orbiting Earth, at least one lateral face having a solar array so as to enable efficient energy production by means of solar energy to be provided on the lateral face side of the satellite main body facing the sun or being at least directed towards the sun when the satellite is orbiting Earth, and at least one lateral face which can be directed towards the dark space for enabling heat radiation for radiating heat away from the satellite main body when the satellite is orbiting Earth.

Consequently, the present invention provides an efficient, small-scalable and reliable Earth observation satellite configuration which - at the same time - allows to minimize air-drag for enabling very Low Earth Orbits so that no large-scale propulsion means and large-scale fuel accommodation means are required, not even for altitudes below 500 km, and to provide efficient and sufficient space for accommodating intermediate to large elongated instruments when being oriented in the satellite main body in the direction of the roll axis. Accordingly, the present invention allows to advantageously still enable intermediate to large aperture size and focal length which allows for sufficient high resolution while simultaneously allowing to efficiently use the satellite(s) in Low Earth Orbits even below 500 km. Using Low Earth Orbits even below 500 km also leads to the capability of increasing the achievable spatial resolution by decreasing the utilized altitude. Accordingly, the invention efficiently allows meeting the requirements of sub-meter high spatial resolution.

At the same time, being able to efficiently decrease the altitude of the used orbit(s) additionally positively affects the capability for fast revisit since lower altitudes lead to lower orbital periods and therefore allow for fast revisit already with lesser satellites than would be required conventionally.

Moreover, the satellite configuration according to the invention provides a simplified satellite main body shape and allows efficient use and accommodation of intermediate size instruments so that the costs can be kept at an affordable level, even development cost for providing plural satellites. In addition, the slender shaped satellite main body allows to efficiently and simultaneously accommodate plural satellites in one intermediate size launching space vehicle so that also costs for launching the satellites in order to establish the satellite system for bringing the plural satellites of the whole Earth observation satellite system in the desired orbit(s) can be efficiently reduced since only one or two launches can establish a whole system having several satellites efficiently allowing to meet the requirements of sub-day fast revisit.

Summarizing the above, the present invention advantageously enables to provide an improved Earth observation satellite concept and an improved Earth observation system concept which allows for fast, efficient and reliable Earth observation capabilities, in particular, which allows providing - at lowered costs and at the same time - high spatial resolution capabilities and fast revisit capabilities.

Regarding the geometrical orientation of the first to third lateral faces, these are preferably arranged substantially in parallel to each other and substantially in parallel to the roll axis of the satellite, preferably such that the first, second and third lateral faces substantially are arranged in a triangle configuration according to which the sections of the first, second and third lateral faces are arranged substantially along respective sides of a triangle in a cross sectional view of the satellite main body seen from the direction of the roll axis. At the same time, sections the first, second and third lateral faces may or may not form the triangle in the cross sectional view.

Preferably, in a cross sectional view, when seen from the direction of the roll axis, each of the angles between the first and second lateral faces, between the second and third lateral faces, and between the third and first lateral faces is preferably larger or equal to 30 degrees and preferably smaller or equal to 120 degrees. In a particularly preferred embodiment, each of the angles between the first and second lateral faces, between the second and third lateral faces, and between the third and first lateral faces is preferably substantially equal to 60 degrees. In another particularly preferred embodiment, two of the angles between the first and second lateral faces, between the second and third lateral faces, and between the third and first lateral faces are preferably substantially equal to 45 degrees while the remaining angle is substantially equal to 90 degrees.

In the following, further preferred features and aspects of the present invention and advantages thereof will be described.

According to a preferred embodiment of the first aspect of the present invention, the satellite further comprises second propulsion means for compensating air-drag being arranged on the second base face of the satellite main body. In this preferred embodiment, the satellite main body has propulsion means for compensating air-drag on both base face sides, i.e., on both opposite arranged base faces of the slender and elongated shape of the satellite main body. That is, the satellite having the same configuration can be even more conveniently used for very different orbits without needing adaptation because the satellite is configured to compensate air-drag in both possible flying directions, i.e., moving in the first velocity direction along the roll axis in which the first base face is the front face of the satellite so that the second propulsion means for compensating air-drag arranged on the second base face can be used for orbit maintenance and moving in the second velocity direction along the roll axis in which the second base face is the front face of the satellite so that the first propulsion means for compensating air-drag arranged on the first base face can be used for orbit maintenance.

Preferably, in any of the above-described aspects, the satellite further comprises propulsion means for performing a yaw flip of the satellite main body about a yaw axis of the satellite. This allows advantageously increasing the maneuverability of the satellite since yap flip maneuvers will be enabled. This allows flipping the orientation of the first and second base faces by rotating the satellite main body about the yaw axis by 180 degrees while maintaining the orientation towards earth of the lateral face having the Earth observation means.

In a particularly advantageous embodiment, the two above-mentioned preferred aspects are combined so that the satellite main body has propulsion means for compensating air-drag arranged on each of the first and second base faces and, at the same time, the satellite further has propulsion means for yaw flip maneuverability so that it is configured to perform a yaw flip maneuver. In this advantageous embodiment, the satellite can be efficiently used for sun-synchronous orbits as well as other orbits which maintain a stable orbital plane that changes its orientation relatively to the direction of the Sun.

In this connection, it is important to note that the orientation of the sun is not only depending on the position of the satellite in orbit but also depending on the season when Earth is orbiting Sun as will be briefly explained in the following. When an orbit of the satellite lies in and stably maintains a certain orbital plane, the orientation of the orbital plane in space is kept rotating slowly (rotation period from 40 days to infinity) due to the effect of the non-sphericity of the Earth in the conservation of angular momentum of the orbiting satellite in the orbital plane. That is, unless the orbit where not sun-synchronous (i.e. when the Sun and the orbital plane rotation period are identical), the orientation of the orbital plane and of the satellite will change its relative orientation with respect to the Sun, when the Earth is orbiting the Sun. For example, during a first season the orbit of the satellite may be lying in an orbital plane that is substantially perpendicular to the vector between Earth and Sun, and in a third season the orbital plane will again be oriented substantially perpendicular to the vector between Earth and Sun in, wherein the sun light is then coming to the satellite from an opposite direction. However, during a second season and a fourth season in between the above-mentioned first and third seasons, the orientation of the orbital plane relative to the sun will be changing continuously form the orientation in the first season to the orientation of the third season such that the Sun will, at a certain point in time during the change of the orientation, be positioned substantially in the orbital plane.

Accordingly, a satellite according to this preferred embodiment of the present invention could be most conveniently used in such orbits where the solar geometry changes along the seasons since the first lateral side face of the satellite main body that has the first solar panel of the solar array could be oriented such that it faces the Sun in a first season in which the Sun is approximately oriented perpendicular to the orbital plane of the satellite, as in the above example. Then, in the next-to-next third season, in the above example, the orbital plane will be oriented such that the Sun is approximately oriented perpendicular again to the orbital plane of the satellite, wherein the sun light is then coming from the opposite side when seen relative from the point of view of the satellite. In the above described preferred embodiment, there could be performed a yaw flip maneuver during the second or the fourth season which are between the first and second season, in the above example. Then, the solar panel carrying lateral face can be conveniently oriented towards the Sun in each of the mentioned seasons (first to fourth seasons) while being able to compensate air-drag during the whole first to fourth seasons due to the propulsion means being arranged on each of the first and second base faces of the satellite main body.

The same embodiment can be used with advantage in constellations with a multiplicity of Sun-Synchronous orbits. In Sun-Synchronous orbits the geometry of the Sun does not change with the seasons but the geometry of the Sun will be different for each different Sun-Synchronous orbit. The preferred embodiment will allow that the same satellite can be adapted to fly efficiently in all the different Sun-Synchronous orbits with all the different Sun geometries. This satellite commonality for all the orbits will allow further cost reductions.

Preferably, in any of the above-described aspects, the first propulsion means for compensating air-drag comprises an ion thruster device which is supplied with electrical energy by means of the solar array and/or the second propulsion means for compensating air-drag comprises an ion thruster device which is supplied with electrical energy by means of the solar array. Using an ion thruster, preferably electromagnetic ion thruster, as propulsion means for compensating air-drag has the huge advantage that it can be fit conveniently on small base faces and could be supplied by electric energy generated by means of solar energy collected at the solar array. Thus, the satellite main body affordably can be made smaller and less heavy since there is no need for large fuel tanks, thereby reducing overall costs, increasing launching efficiency and further reducing air-drag effects in very Low Earth Orbits even below 500 km. Only small tanks for storing fuel for the ion supply will be needed such as tanks storing elements such as Xe used for the ions.

According to another preferred embodiment of the first aspect of the present invention, in any of the above-described aspects, the first solar panel is fixedly attached to the first lateral face of the satellite main body and preferably has a first lateral side extending in the direction of the roll axis of the satellite. Accordingly, the first solar panel can be fixed to the satellite main body such that substantially no additional air-drag is generated by the solar array in addition to the air-drag caused by the base faces of the satellite main body.

Furthermore, the solar array preferably comprises a second solar panel being preferably attached with a lateral side thereof to the satellite main body and/or the first solar panel along the first lateral side of the first solar panel. Accordingly, even another solar panel could be attached to the first solar panel or the satellite main body such that substantially no additional air-drag is generated by the solar array in addition to the air-drag caused by the base faces of the satellite main body, while energy supply can be further increased due to a larger solar panel area being available.

Preferably, the second solar panel is a single degree of freedom adjustable solar panel so that a canting angle of the second solar panel relative to the first solar panel is preferably continuously adjustable according to the single degree of freedom about an axis extending along the first lateral side of the first solar panel. This would have the advantage that the orientation of the second solar panel could be made seasonally adjustable so that the orientation of the second solar panel could be conveniently adjusted in dependence on the direction of the Sun throughout the year, i.e. throughout the first to fourth seasons of the above example. That is, in orbits that have stable orbital planes which are in one first season, and a next-to-next third season,, oriented substantially perpendicular to the direction of the Sun, the second solar panel could be conveniently adjusted to optimize the energy efficiency by increasing and optimizing the effective available solar panel area seen from the direction of the Sun. Nevertheless, in a configuration in which the first and the second solar panel are both substantially oriented in the direction of the roll axis as discussed above, still there is substantially no additional air-drag caused by the configuration. Here, single degree of freedom adjustable solar panels is to be understood as a solar panel which is adjustable about a single rotation axis or canting axis. This shall be distinguished from two degree of freedom adjustable solar panels which allow rotating a solar panel about two axes.

According to another preferred embodiment of the first aspect of the present invention, in any of the above-described aspects, the first solar panel has a second lateral side extending in the direction of the roll axis of the satellite, wherein the solar array preferably comprises a third solar panel being preferably attached with a lateral side thereof to the satellite main body or the first solar panel along the second lateral side of the first solar panel. This allows to even further increase the effective solar panel area seen from the direction of the Sun leading to even better energy generation capabilities by means of collecting solar energy while at the same time still providing a configuration in which the first, second, and third solar panels may be all substantially oriented in the direction of the roll axis so that there is still substantially no additional air-drag caused by the configuration.

Preferably, the third solar panel is a single degree of freedom adjustable solar panel so that a canting angle of the third solar panel relative to the first solar panel is preferably adjustable according to the single degree of freedom about an axis extending along the second lateral side of the first solar panel. This would have the advantage that the orientation of the third solar panel could be made seasonally adjustable so that the orientation of the second solar panel could be conveniently adjusted in dependence on the direction of the Sun throughout the year, i.e. throughout the first to fourth seasons of the above example. That is, in orbits that have stable orbital planes which are in one first season, and a next-to-next third season, oriented substantially perpendicular to the direction of the Sun, the third solar panel could be conveniently adjusted to optimize the energy efficiency by increasing and optimizing the effective available solar panel area seen from the direction of the Sun.

According to another preferred embodiment of the first aspect of the present invention, in any of the above-described aspects, the satellite main body substantially has an elongated prism shape formed from the first and second base faces and the plurality of laterally arranged lateral faces. According to a particularly preferred embodiment, the satellite main body substantially has an elongated three-faced prism shape formed from the first and second base faces and the laterally arranged first, second and third lateral faces. The prism shape provides a simple and advantageous geometry for the satellite main body which allows efficiently providing the slender elongated shape having the base faces of the satellite main body corresponding to the base faces of the prism and the lateral faces being formed by one or more faces of the prism. In a laterally three sided prism, there could be conveniently be provided each of the first to third lateral faces of the satellite main body as one of the side faces of the three sided prism. Still, the base faces do not need to be arranged in parallel as is in a very strict sense the case in a prism shape so that another very advantageous shape is a slender parallelepiped shape used as geometrical basis for the satellite main body.

According to another preferred embodiment of the first aspect of the present invention, in any of the above-described aspects, the observation means for Earth observations comprises a Synthetic Aperture Radar (SAR) device and/or a high-resolution optical observation device. These devices have been proven to be very useful in Earth observations from satellites and are particularly advantageously combined.

According to another preferred embodiment of the first aspect of the present invention, in any of the above-described aspects, the observation means for Earth observations arranged on the third lateral face of the satellite main body comprises a planar Synthetic Aperture Radar array. Then, the available area space on the elongated third lateral face could be efficiently used for a intermediate size to large size planar array of a Synthetic Aperture Radar device, wherein preferably substantially the whole surface area of the third lateral face may be covered with the planar Synthetic Aperture Radar array. Accordingly, there could be advantageously provided a Synthetic Aperture Radar device providing intermediate to large aperture size for achieving improved high spatial resolution capability. This accommodation does not increase satellite transversal area and therefore does not increase air-drag.

According to another preferred embodiment of the first aspect of the present invention, in any of the above-described aspects, an optical telescope is disposed in the satellite main body, wherein the observation means for Earth observations arranged on the third lateral face of the satellite main body preferably comprises an optical baffle of the optical telescope. Optical telescopes have been proven as very reliable and efficient observation means for high resolution optical observations.

Preferably, the optical telescope is a reflecting optical telescope or a refracting telescope, the telescope having an optical axis extending preferably in the direction of the roll axis of the satellite. Accordingly, due to the advantageous slender and elongated shape of the main body, there can be provided a telescope having an intermediate to large focal length because the elongated shape of such a telescope having an intermediate to large focal length can be conveniently fit into the satellite main body by arranging the principal optical axis of the telescope substantially in parallel with the roll axis of the satellite which is the direction of the elongated extension of the satellite main body. Thus, even though the overall size of the satellite can be kept small and the face area can be kept small by means of the elongated slender shape of the satellite main body, it is advantageously possible to fit an intermediate to large scale telescope into the satellite main body, thereby, allowing for improved high spatial resolution capabilities. This accommodation does not increase satellite transversal area and therefore does not increase air-drag

Further preferably, the optical telescope comprises one or more curved mirrors arranged along an optical axis of the telescope extending preferably substantially in parallel with the roll axis of the satellite, a first folding mirror for reflecting light which enters through the optical baffle into a direction of the optical axis of the telescope, and/or a second folding mirror for reflecting light from the optical axis to a focal plane of the optical telescope. The first folding mirror makes it possible to redirect the light entering from the baffle to the optical axis of the telescope by simple and reliable means and the optionally additionally provided second folding mirror makes it possible by simple and reliable means to arrange a focal plane adjacent and perpendicular to the optical axis such that the focal plane can be arranged in parallel with one of the lateral faces of the satellite main body. Preferably this face will be the dark space looking face to reduce the temperature and increase the efficiency of the focal plane. The focal plane may be provided with a CCD for digitally collecting image data that can be conveniently sent to a base station on Earth by means of a downlink antenna which can be arranged on the same third lateral face as the optical baffle of the Earth observation means.

Preferably, the first folding mirror is rotatably adjustable about an axis which extends perpendicular to the roll axis of the satellite and/or perpendicular to a yaw axis of the satellite, about the yaw axis of the satellite and/or about the roll axis of the satellite. Accordingly, the available observation angle of the satellite can be efficiently increased without requiring to maneuver the whole satellite body about one or more of the roll, yaw and pitch axes, which will increase the air-drag of the satellite while internal rotations of the first folding mirror does not increase the air-drag of the satellite. Preferably, the first folding mirror is rotatably adjustable about two of the pitch axis of the satellite, the yaw axis of the satellite and the roll axis of the satellite.

According to another preferred embodiment of the first aspect of the present invention, in any of the above-described aspects, the satellite further comprises propulsion means for performing a roll maneuver of the satellite main body about the roll axis of the satellite. This allows to even further increase the available observation angle since the orientation of viewing direction of the observation means arranged on the third lateral side of the satellite can be adjusted in the lateral direction by rolling the satellite main body by controlling a roll of the satellite about the roll axis. This roll maneuver, being around the velocity vector, does not increase the air-drag of the satellite

In the following, further aspects of the present invention are described, wherein the advantageous technical effects of the first aspect discussed above also relate to the aspects discussed in the following. Furthermore, the below-described aspects can be combined with any of the features of one or more of the above-described preferred embodiments while providing similar advantageous technical effects as described above.

According to a second aspect of the present invention, an Earth observation satellite system which comprises a plurality of Earth observation satellites according to the above-mentioned first aspect of the present invention, preferably according to at least one of the above-mentioned preferred embodiments thereof.

According to a preferred embodiment of the second aspect of the present invention the Earth observation satellites are orbiting Earth in one or more Low Earth Orbits, in particular in Low Earth Orbits preferably having altitudes below 500 km, in particular even more preferably below 300 km. The low orbits at altitudes of below 500 km, in particular even more preferably below 300 km, allow for improved high spatial resolution capabilities at same instrument sizes and lead to further improved fast revisit times due to lower orbital periods while the increasing air-drag can be still compensated due to the slender elongated shape of the satellite main body which is oriented in the direction of the roll axis and propulsion means such as most preferably ion thruster devices that can be efficiently supplied with energy by means of the solar array of the satellites.

According to a third aspect of the present invention, a launching system for launching satellites into one or more Earth orbits comprises a launching space vehicle and a plurality of Earth observation satellites according to the above-mentioned first aspect of the present invention, preferably according to at least one of the above-mentioned preferred embodiments thereof.

Preferably, the plurality of satellites are accommodated in the space vehicle such that the roll axes of the satellite main bodies are arranged substantially in parallel to each other and substantially in parallel to the roll axis of the space vehicle. This configuration makes it possible to efficiently accommodate a larger number of satellites in a storage bay of a space vehicle such as a rocket or a space shuttle so that plural satellites can be efficiently and affordable brought at the same time into the orbit(s).

### Brief Description of the Figures

**Figs. 1A and 1B** show exemplary schematic perspective views of an Earth observation satellite according to a first embodiment of the present invention.
**Figs. 2A, 2B and 2C** show exemplary schematic cross-sectional views of the Earth observation satellite according to the first embodiment of the present invention for an orbital plane configuration in which the Sun is oriented close to the orbital plane, the cross-sectional view being perpendicular to a satellite roll axis.
**Figs. 3A, 3B** **and** **3C** show exemplary schematic cross-sectional views of the Earth observation satellite according to the first embodiment of the present invention for an orbital plane configuration in which the Sun is oriented close to perpendicular to the orbital plane, the cross-sectional view being perpendicular to a satellite roll axis.
**Fig. 4** shows an exemplary schematic cross-sectional views of the Earth observation satellite according to the first embodiment of the present invention in a launching configuration, the cross-sectional view being perpendicular to a satellite roll axis.
**Fig. 5A** shows an exemplary schematic perspective image of the Earth observation satellite according to the first embodiment of the present invention in an Earth orbit for an orbital plane configuration in which the Sun is oriented close to the orbital plane and **Fig. 5B** shows an exemplary schematic perspective image of the Earth observation satellite according to the first embodiment of the present invention in an Earth orbit for an orbital plane configuration in which the Sun is oriented close to perpendicular to the orbital plane.
**Fig. 6** shows an exemplary schematic cross-sectional view of a launching system comprising a plurality of Earth observation satellites according to the first embodiment of the present invention, the cross-sectional view being perpendicular to a satellite roll axis.
**Fig. 7** shows an exemplary schematic cross-sectional view of the Earth observation satellite according to a second embodiment of the present invention in a launching configuration, the cross-sectional view being perpendicular to a satellite roll axis.
**Figs. 8A and 8B** show exemplary schematic cross-sectional views of launching systems comprising a plurality of Earth observation satellites according to a third embodiment of the present invention, the cross-sectional view being perpendicular to a satellite roll axis.
**Fig. 9** shows an exemplary schematic perspective image of a part of a space vehicle of a launching system according to an embodiment of the present invention.
**Fig. 10** shows an exemplary schematic cross-sectional view of the Earth observation satellite according to a fourth embodiment of the present invention for an orbital plane configuration in which the Sun is oriented close to the orbital plane, the cross-sectional view being perpendicular to a satellite roll axis.
**Fig. 11** shows an exemplary schematic partially transparent perspective view of an instrument configuration of an optical Earth observation satellite according to an embodiment of the present invention.
**Fig. 12A** shows an exemplary schematic cross-sectional view of the Earth observation satellite according to a fifth embodiment of the present invention, the cross-sectional view being perpendicular to a satellite roll axis, and **Fig. 12B** shows an exemplary schematic cross-sectional view of the Earth observation satellite according to the fifth embodiment of the present invention, the cross-sectional view being perpendicular to a satellite pitch axis.

### Detailed Description of the Figures and of

### Preferred Embodiments of the Present Invention

Preferred embodiments of the present invention will be described below with reference to the figures. It is to be noted that the described features and aspects of the embodiments may be modified or combined to form further embodiments of the present invention.

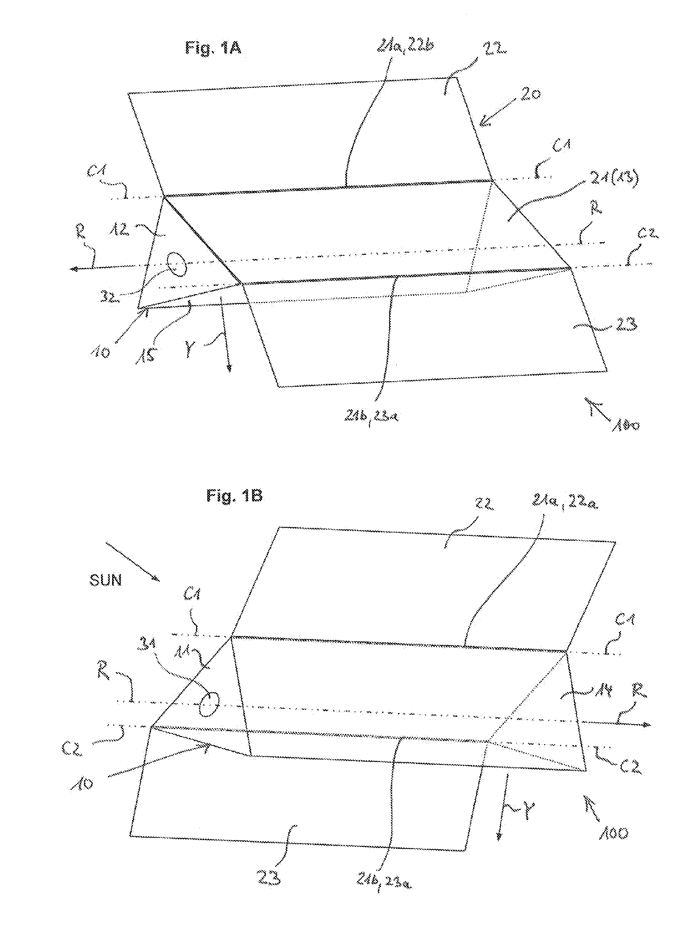

**Figs. 1A and 1B** show exemplary schematic perspective views of an Earth observation satellite 100 according to a first embodiment of the present invention.

The Earth observation satellite 100 shown in **Figs. 1A and 1B** comprises a satellite main body 10 having an elongated shape which extends in the direction of the roll axis R of the satellite 100 from a first triangular base face 11 of the satellite main body 10 to a second triangular base face 12 of the satellite main body 10. The roll axis R is the intended direction of the velocity vector when the satellite 100 is in nominal orbital orientation in an Earth orbit. The roll axis R is perpendicular to a yaw axis Y of the satellite 100 which is perpendicularly oriented in the direction of the Earth surface in nominal orbital orientation in an Erath orbit. Accordingly, in nominal orbital operation of the satellite 100, the yaw axis Y is directed down towards the Earth surface substantially in parallel with the Nadir direction, while the roll axis R is substantially directed into the velocity direction which is oriented substantially perpendicular to the direction of Nadir and tangentially to the orbit.

On lateral sides thereof, the satellite main body 10 has three lateral faces 13, 14 and 15 which extend from the first base face 11 to the second base face 12. In particular, the three lateral faces 13, 14 and 15 are directly adjacent to each other such that the three lateral faces 13, 14 and 15 together with the base faces 11 and 12 form the overall shape of the satellite main body 10. Accordingly, the satellite main body 10 substantially has an elongated three-faced prism shape formed from the first and second base faces 11 and 12 and the laterally arranged faces 13, 14, and 15. Lateral faces 13, 14, and 15 will be referred to as first lateral face 13, second lateral face 14 and third lateral face 15.

A first solar panel 21 of a three-panel solar array 20 is mounted on the first lateral face 13 of the satellite main body 10. Since the third lateral face 15 of the satellite main body 10 is directed substantially in the direction of Nadir towards the Earth surface in a nominal orbital orientation of the satellite, the observation means 40 for Earth observations such as apertures and/or baffles are arranged on this lateral face 15. The remaining lateral face 14 (i.e. the second lateral face 14) of the satellite main body 10 can conveniently be used for radiating heat away from the satellite main body 10 since it will be oriented to dark space when the first lateral face 13 is nominally oriented towards the direction of the Sun and the third lateral face 15 is nominally oriented towards the Earth surface.

The first solar panel 21 of the solar array 20 is fixedly attached to the first lateral face 13 of the satellite main body 10 and has a first lateral side 21a, which extends in parallel with the direction of the roll axis R of the satellite 100, as well as a second lateral side 21b, which also extends in the direction of the roll axis R of the satellite 100, i.e. the first lateral side 21a and the second lateral side 21b of the first solar panel 21 extend in parallel with each other. In the embodiment of **Figs. 1A and 1B**, exemplarily, the first solar panel 21 substantially covers the complete first lateral face 13 of the satellite main body 10. This is a particularly preferred embodiment since the whole face of the first lateral face 13 can be efficiently used for collecting solar energy.

The three-panel solar array 20 comprises a second solar panel 22 and a third solar panel 23. The second solar panel 22 is attached with a lateral side 22a thereof to the first solar panel 21 along the first lateral side 21a of the first solar panel 21. Alternatively, the second solar panel 22 could also be attached with a lateral side 22a thereof to satellite main body 10 along the first lateral side 21a of the first solar panel 21. The third solar panel 23 is attached with a lateral side 23a thereof to the first solar panel 21 along the second lateral side 21b of the first solar panel 21. Alternatively, the third solar panel 23 could also be attached with a lateral side 23a thereof to the satellite main body 10 along the second lateral side 21b of the first solar panel 21. As can be seen in **Figs. 1A and 1B**, the all lateral sides of the solar panels 21, 22 and 23 extend in parallel with the roll axis.

First propulsion means 31 for compensating air-drag are arranged on the first base face 11 of the satellite main body 10 and second propulsion means 32 for compensating air-drag are arranged on the second base face 12 of the satellite main body 10. Accordingly, the satellite is conveniently enabled to compensate air-drag in a first direction parallel to the roll axis R and in the opposite second direction parallel to the roll axis R. In other words, both base faces 11 and 12 can function as front face and as back face. That is, after a yaw flip maneuver is performed, which corresponds to a rotation of the satellite 100 by 180 degrees about the yaw axis Y, the third lateral face 15 carrying the observation means is still conveniently directed towards the object of observation, namely, the surface of the Earth. On the other hand, the relative locations of the first and second lateral faces 13 and 14 as well as the relative locations of the first and second base faces 11 and 12 are switched or flipped. Summarizing, after performing a yaw flip, the back face becomes the front face and the front face becomes the back face. Still, at each point in time, the respective back face is equipped with its own propulsion means 31 or 32 for compensating air-drag.

According to the first embodiment, the second solar panel 22 is a single degree of freedom adjustable solar panel so that a canting angle of the second solar panel 22 relative to the first solar panel 21 is continuously adjustable according to the single degree of freedom about a canting axis C1 extending along the first lateral side 21a of the first solar panel 21. Also the third solar panel 23 is a single degree of freedom adjustable solar panel so that a canting angle of the third solar panel 23 relative to the first solar panel 21 is continuously adjustable according to the single degree of freedom about a canting axis C2 extending along the second lateral side 21b of the first solar panel 21.

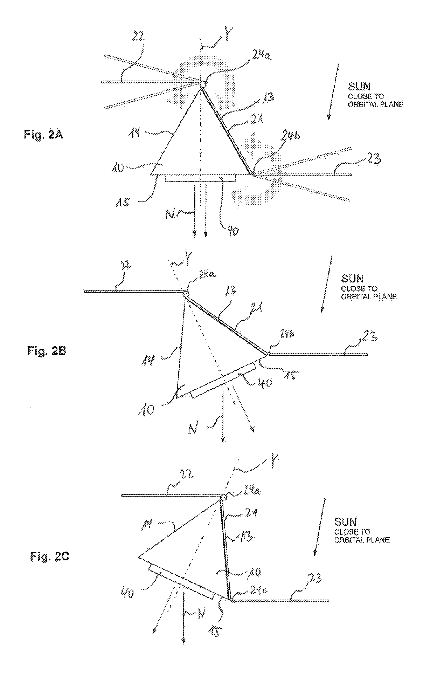

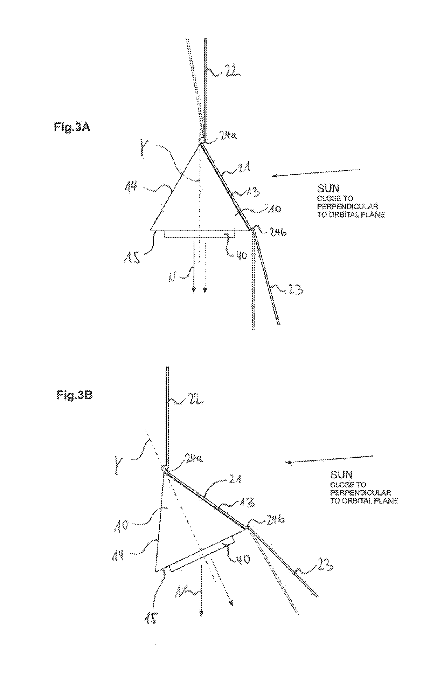

Such a configuration of a three panel solar array 20, which has a fixedly attached middle solar array 21 having on both sides thereof single degree of freedom adjustable winglet solar panels 22 and 23, is particularly advantageous for orbits which have an orbital plane that is in two of four seasons oriented substantially perpendicular to the direction of the Sun (e.g. in a first season and its next-to next third season as in the example discussed above). In particular, such a three panel solar array 20 provides a simple and efficient affordable solution for being able to seasonally adjust the solar array configuration. This will be explained in more detail in connection with **Figs. 2A to 2C** and **Figs. 3A to 3C** below.

For instance, the satellite 100 might be used in an orbit which has a orbital plane which changes its orientation relative to the Sun while Earth is orbiting the Sun. In a scenario in which the orbital plane is substantially perpendicular to the direction of the Sun in a first season. The orbital plane will then be again substantially perpendicular to the direction of the Sun in a next-to-next later season (i.e. a third season),. However, in the earlier first season the sun light will arrive at the satellite from an opposite direction compared to the direction of sun light in the later third season. In between, there are two intermediate seasons (i.e. a second and a fourth season) where, the orbital plane will be oriented such that the Sun is lying substantially within the orbital plane. In such a scenario, the following Figs. **2A to 2C** correspond to the situation occurring in those intermediate second and fourth seasons and the **Figs. 3A to 3C** correspond to the situation occurring in the first and third season.

**Figs. 2A, 2B and 2C** show exemplary schematic cross-sectional views of the Earth observation satellite 100 according to the first embodiment of the present invention for an orbital plane configuration in which the Sun is oriented close to the orbital plane, the cross-sectional view being perpendicular to the satellite roll axis R. That is, the roll axis R of the satellite main body 10 is oriented perpendicular to the plane of projection of the **Figs. 2A to 2C** and the velocity vector of the satellite 100 in nominal orbit orientation is also directed so as to be oriented perpendicular to the plane of projection. The direction Nadir is indicated by the arrow N and directs directly to the surface of the Earth (i.e. the Nadir N is parallel to a radial direction of the Earth).

The dotted arrow in **Figs. 2A to 2C** shows the direct line of sight of the Earth observation means 40 arranged on the third lateral face 15 of the satellite main body 10. The line of sight of the Earth observation means 40 in this embodiment is substantially perpendicular to the third lateral face 15 of the satellite main body 10.

Since the Sun is oriented close to the orbital plane, optimal solar energy collecting efficiency can be obtained by adjusting the second and third solar panels 22 and 23 in a substantially horizontal position substantially perpendicular to the orbital plane. This can be achieved in the first embodiment by adjusting the orientation of the second and third solar panels 22 and 23 by appropriately rotating them about the canting axes C1 and C2.

As indicated by the grey arrows in **Fig. 2A**, the second solar panel 22 can be rotatably adjusted by the single rotational degree of freedom about the canting axis C1 by means of the first pivot joint 24a and a driving means (not shown). The third solar panel 23 can be rotatably adjusted by the single rotational degree of freedom about the canting axis C2 by means of the second pivot joint 24b and a driving means (not shown). The dotted solar panels indicate other possible orientations of the second and third solar panels 22 and 23 for possible fine adjustment enabling optimizing the solar energy collecting efficiency.

**Figs. 2B and 2C** show possible adjusted orientations of the solar panels 22 and 23 in satellite orientations in which the satellite main body is rotated to a certain extent about the roll axis R in order to enable observing also areas on the Earth surface that are not positioned directly below the satellite in the direction N of Nadir but laterally thereto. For this purpose, by rolling the satellite main body to a certain extent about the roll axis R, the line of sight of the observation means 40 can be inclined relative to the direction of Nadir. Nevertheless, as shown in **Figs. 2B and 2C**, the orientation of the solar panels 22 and 23 can be appropriately and conveniently adjusted to optimize solar energy collecting efficiency in all of the satellite orientations of **Figs. 2A to 2C**. Furthermore, in each of the shown orientations, the satellite only experiences reduced air-drag even in Low Earth Orbits even below 500 km due to the small cross section which is basically only corresponding to the cross section of the base faces 11 and 12 of the satellite main body 10 despite the relatively large solar array.

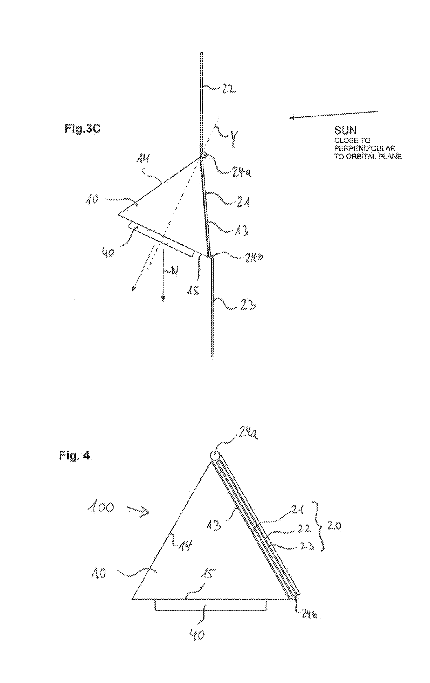

**Figs. 3A, 3B** **and** **3C** show exemplary schematic cross-sectional views of the Earth observation satellite 100 according to the first embodiment of the present invention for an orbital plane configuration in which the Sun is oriented close to perpendicular to the orbital plane, the cross-sectional view being perpendicular to the satellite roll axis R. That is, the roll axis R of the satellite main body is oriented perpendicular to the plane of projection of the **Figs. 3A to 3C** and the velocity vector of the satellite in nominal orbit orientation is also directed so as to be oriented perpendicular to the plane of projection.

Since the Sun is oriented close to perpendicular to the orbital plane, optimal solar energy collecting efficiency can be obtained by adjusting the second and third solar panels 22 and 23 in a substantially vertical position substantially parallel to the orbital plane. This can be achieved in the first embodiment by adjusting the orientation of the second and third solar panels 22 and 23 by appropriately rotating them about the canting axes C1 and C2.

**Fig. 3A** shows the nominal orbital orientation of the satellite main body 10 in which the line of sight (dotted arrow) of the Earth observation means 40 is directed downwards to Earth substantially in parallel with the direction N of Nadir. **Figs. 3B** **and** **3C** show possible adjusted orientations of the solar panels 22 and 23 in satellite orientations in which the satellite main body is rotated to a certain extent about the roll axis R in order to enable observing also areas on the Earth surface that are not positioned directly below the satellite in the direction N of Nadir but laterally thereto.

Nevertheless, as shown in **Figs. 3B** **and** **3C****,** the orientation of the solar panels 22 and 23 can be appropriately and conveniently adjusted to optimize solar energy collecting efficiency in all of the satellite orientations of **Figs. 3A to 3C****.** Furthermore, in each of the shown orientations, the satellite only experiences reduced air-drag even in Low Earth Orbits even below 500 km due to the small cross section which is basically only corresponding to the cross section of the base faces 11 and 12 of the satellite main body 10.

Summarizing, **Figs. 2A to 3C** illustrate that the configuration of the satellite according to the first embodiment provides optimal, efficient and simple solar array adjustability capabilities which allow seasonally adjusting the orientation of the solar panels 22 and 23 to the direction of the Sun for increasing solar energy collecting efficiency while it is further conveniently possible to adjust the orientation of the solar panels depending on the current roll orientation of the satellite main body 10 regarding the line of sight of the Earth observation means 40 in relation to the direction of Nadir. At the same time, independent of the adjusted orientation of the solar panels 22 and 23, air-drag effects can be kept small so that the satellite can be efficiently handled in Low Earth orbits even below 500 km.

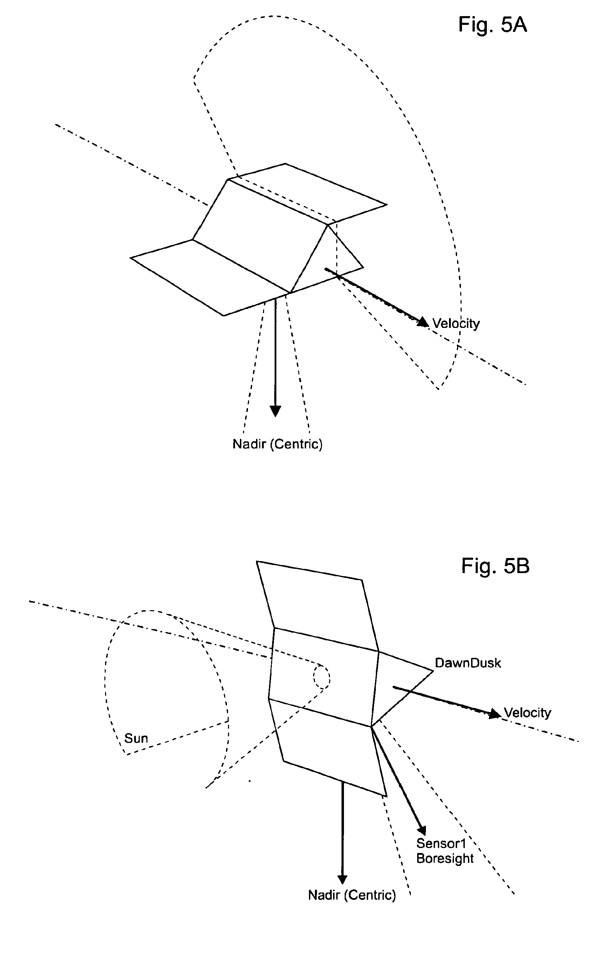

**Fig. 4** shows an exemplary schematic cross-sectional view of the Earth observation satellite 100 according to the first embodiment of the present invention in a launching configuration, the cross-sectional view being perpendicular to the satellite roll axis R. That is, the roll axis R of the satellite main body 10 is oriented perpendicular to the plane of projection of **Fig. 4****.** The second and third solar panels 22 and 23 are compactly folded to be oriented in parallel with the first solar panel 21 and the first lateral face 13 of the satellite main body 10. In this launching configuration, the satellite can be efficiently stored in a storage bay of a launching space vehicle such as a rocket or a space shuttle. Once the satellite has been brought to its orbit by means of the launching space vehicle, the solar panels 22 and 23 can be unfolded to orientations as shown in **Figs. 2A to 3C** and the satellite 100 is ready to operate and collect solar energy, please also refer to **Figs. 5A and 5B****.**

**Fig. 5A** shows an exemplary schematic perspective image of the Earth observation satellite 100 according to the first embodiment of the present invention in an Earth orbit for an orbital plane configuration in which the Sun is oriented close to the orbital plane as explained in detail above in connection with **Figs. 2A to 2C****.** **Fig. 5B** shows an exemplary schematic perspective image of the Earth observation satellite 100 according to the first embodiment of the present invention in an Earth orbit for an orbital plane configuration in which the Sun is oriented close to perpendicular to the orbital plane as explained in detail above in connection with **Figs. 3A to 3C****.** In **Figs. 5A and 5B****,** the direction of the Sun is indicated by the bright Sun cones which illustrate the cone of the direction of the Sun according to which the orientation of the Sun changes over one orbital period of the satellite. As can be seen in **Fig. 5A****,** the cone of the Sun has a very large solar aspect angle in case the Sun is directed close to the orbital plane and, as can be seen in **Fig. 5B****,** the cone of the Sun has a small solar aspect angle in case the Sun is directed close to perpendicular to the orbital plane.

In Low Earth Orbits, the Sun describes a cone around the perpendicular to the orbital plane as illustrated in **Figs. 5A and 5B****.** The angular distance from the perpendicular to the orbital plane to the Sun vector is the solar aspect angle. When the solar aspect angle is small the cone is pointed (e.g. Fig. 5B) and with the solar aspect angle being close to 90 degrees, the cone is blunt (e.g. **Fig. 5A**). If the satellite orbit is Sun-Synchronous the solar aspect angle will be fairly constant along the seasons. If the orbit is not Sun-Synchronous, the Sun will move from one side of the orbital plane to the other within a period of variable length depending on the orbit, the variable length of the period going from approximately 40 days to infinite days (in the case of Sun-Synchronous orbits).

As can be seen in **Figs. 5A and 5B****,** the proposed geometry provides optimal in orbit visibility with the observation instruments looking towards Nadir, the solar arrays for energy production looking in the general direction of the Sun, and solar radiators looking to deep space. This optimal visibility is possible either for the Sun near the orbital plane (as e.g. in **Fig. 5A**) and for the Sun near the perpendicular to the orbital plain (as e.g. in **Fig. 5B**). This makes the proposed satellite geometry adequate for all possible orbits and for all seasons.

The geometry of **Fig. 5B** exemplarily shows a side looking observation direction. It could be either a side looking SAR or an optical instrument pointing to one side of the sub-satellite track. The Sun angle and the orbit altitude are such that the satellite has a short eclipse; this is the reason why the Sun angle cone is broken in the sector closer to Nadir. This geometry will happen in Sun-Synchronous orbits with local time not far away from the dawn-dusk line, or in moderate to high inclination non-Sun-synchronous orbits with the Sun not far away from the perpendicular to the orbital plane. The geometry of **Fig. 5A** exemplarily shows a Nadir pointing observation direction. It can be a typical Nadir looking optical instrument but could also be a Nadir looking microwave instrument, e.g. altimetry radar. The Sun angle is such that the cone angle almost coincides with the orbital plane. In this situation the satellite will have an eclipse equal to one third of the orbital period. This geometry will occur in Sun-Synchronous orbits with local time not far away from 12:00. The geometry will also occur in any non-Sun-synchronous orbits when the Sun is not far away from the orbital plane.

In all cases, a first lateral face of the three-lateral symmetry of the satellite body 10 will be pointing in the general direction of the Sun. In that first lateral face 13, the satellite has a solar panel 23. If needed by mission power requirements, the two supplementary adjustable winglets (solar panels 22 and 23) will provide the necessary power. This power can be used for a higher duty cycle for an SAR instrument, to provide in-orbit drag compensation by ion-thrusters or for a combination of both. The second lateral face 14 of the satellite will point in the general direction of the deep space and will be adequate for the radiation of the waste heat generated by the platform and the instrument.

The nominal pointing direction of SAR instruments is side-looking. The nominal attitude for the SAR satellite shall be the side-looking attitude that provides the highest amount of power and the best deep space view for radiation. Nevertheless, to ensure fast revisit in crisis situations, the SAR shall be able to point to the right and to the left of the flying path. That means the satellite shall be able to manoeuvre around roll to point from the nominal side to the opposite. This manoeuvrability will be helped by the fact that the roll axis of the slender satellite is the axis of minimum inertia and that rolling does not change the satellite transversal area or drag. The nominal attitude for optical satellites will be the Nadir looking one. Power production and heat dissipation in the Nadir looking attitude is smaller than for the side looking one but the power and heat rejection needs for the optical mission will be always smaller than for a SAR mission. That means, this configuration is also very adequate for optical systems. The satellite will also allow pointing to the right or to the left of the Nadir direction as required by the requests of the users.

The proposed satellite configuration provides a large area third lateral face on the main body 10 of the satellite 100 which may be used a large side looking flat surface (side-looking as in e.g. Figs. 2B, 2C, 3B and 3C) that provides excellent accommodation capabilities for planar SAR arrays. The accommodation of SAR parabolic reflector antenna instrument is still possible but the antenna would induce higher air-drag.

Maximum and minimum incidence angles for an embodiment having SAR observation means can be selected relatively large when compared with previous SAR missions. They can be selected to optimise the area of regard and high resolution at the expenses of some degradation in signal to noise ratio. Security applications will favour this approach because they are interested in man-made objects, which have very high backscatter, and because space resolution is the most important parameter for correct photo-interpretation. Furthermore the very low flying altitudes of this concept such as altitudes (e.g. below 500 km, preferably below 400 km and possibly even below 300 km) will intrinsically improve the signal to noise ratio of the SAR instrument.

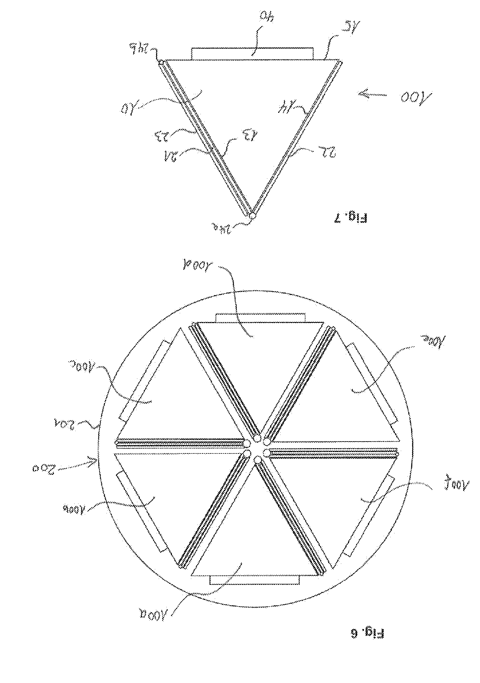

**Fig. 6** shows an exemplary schematic cross-sectional view of a launching system comprising a plurality of Earth observation satellites according to the first embodiment of the present invention, the cross-sectional view being perpendicular to the satellite roll axis R and the roll axis of a space vehicle 200. Each of the single satellites 100a, 100b, 100c, 100d, 100e and 100f exemplarily corresponds to the satellite 100 described above. In particular, each of the single satellites 100a, 100b, 100c, 100d, 100e and 100f is in a launching configuration as illustrated in **Fig. 4****.** In the first embodiment, the sections of the first, second and third lateral faces 13, 14 and 15 of the satellite main body 10 substantially form an equilateral triangle having three angles being substantially equal to 60 degrees.

Accordingly, as shown in **Fig. 6**, the six satellites 100a, 100b, 100c, 100d, 100e and 100f can be conveniently arranged with their roll axes oriented in parallel in a very compact configuration. That is, the six satellites 100a, 100b, 100c, 100d, 100e and 100f can be very compactly accommodated in the rotational symmetrical storage bay 201 of the launching space vehicle 200 such as a rocket, which conveniently may have a rotational symmetric storage bay 201 in the nose head of the rocket. Then, the six satellites 100a, 100b, 100c, 100d, 100e and 100f can be conveniently arranged in a very compact configuration when the roll axes of the satellites are oriented in parallel with the roll axis of the space vehicle 200.

**Fig. 7** shows an exemplary schematic cross-sectional view of the Earth observation satellite 100 according to a second embodiment of the present invention in a launching configuration, the cross-sectional view being perpendicular to a satellite roll axis R. The only difference to the satellite configuration of **Figs. 2A to 4** is that the second solar panel 22 is not folded to the first lateral face 13 in the launching configuration but to the second lateral face 14.

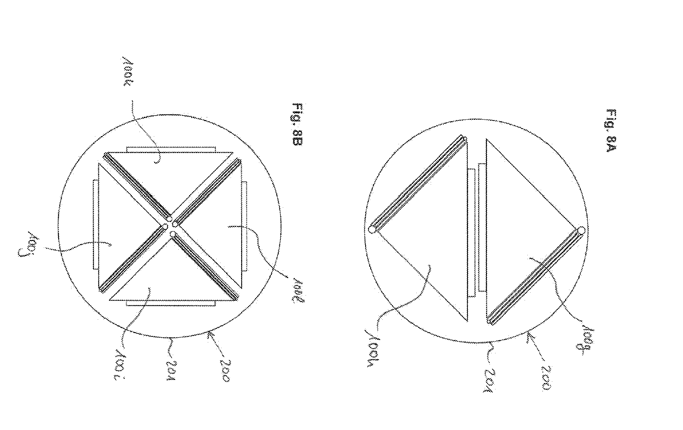

**Figs. 8A and 8B** show exemplary schematic cross-sectional views of launching systems comprising a plurality of Earth observation satellites according to a third embodiment of the present invention, the cross-sectional view being perpendicular to a satellite roll axis. In the above, embodiments of the present invention have been discussed in which the sections of the first, second and third lateral faces 13, 14, and 15 were arranged along sides of a substantially equilateral triangle. In **Figs. 8A and 8B**, the sections of the first, second and third lateral faces 13, 14, and 15 are arranged along sides of a substantially right-angled triangle in which one of the angles between two of the first, second and third lateral faces 13, 14, and 15 is substantially equal to 90 degrees and the remaining angles are substantially equal to 45 degrees, respectively. In **Figs. 8A and 8B**, exemplarily, the angle between the second lateral face 14 for heat radiation and the first lateral face having the first solar panel 21 is the angle being substantially equal to 90 degrees. **Fig. 8A** shows a launching system, in which two such satellites 100g and 100h are arranged in the storage bay 201 of the launching space vehicle 200, and **Fig. 8A** shows a launching system, in which four such satellites 100i, 100j, 100k, and 1001 are compactly arranged in the storage bay 201 of the launching space vehicle 200.

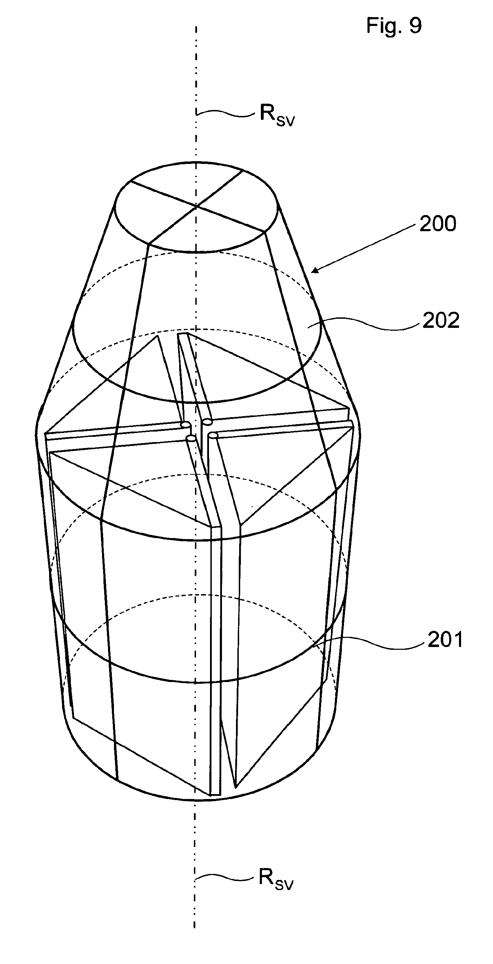

**Fig. 9** shows an exemplary schematic perspective image of a part of a space vehicle 200 of a launching system according to an embodiment of the present invention. The space vehicle 200 of this embodiment is a rocket and 202 indicates the nose cone of the rocket 200 while there is provided a rotational symmetric storage bay 201 adjacent to the nose cone of the rocket 200 in which, exemplarily, four satellites according to an embodiment of the invention are stacked similar to the configuration as illustrated in **Fig. 8B**. The roll axes of the satellites are arranged substantially in parallel with each other and substantially in parallel with the roll axis Rsv of the rocket 200.

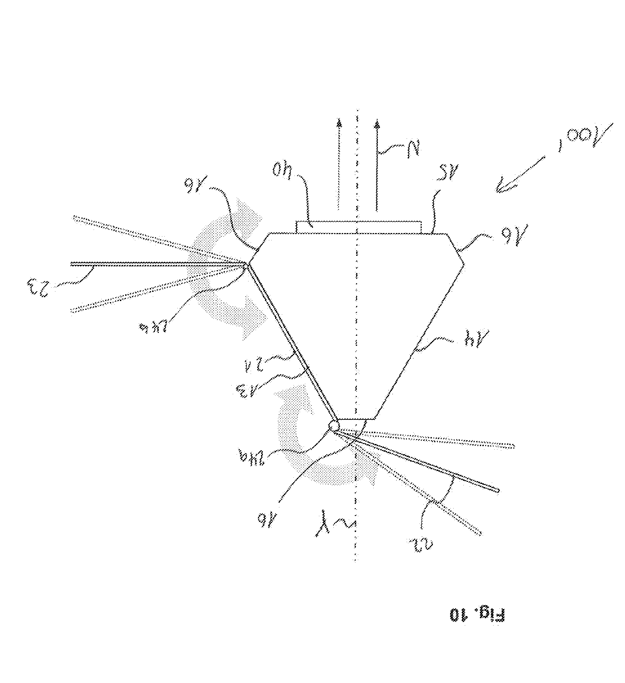

**Fig. 10** shows an exemplary schematic cross-sectional view of the Earth observation satellite 100' according to a fourth embodiment of the present invention for an orbital plane configuration in which the Sun is oriented close to the orbital plane, the cross-sectional view being perpendicular to a satellite roll axis R. In the above discussed embodiments, the satellite main body 10 had the slender shape of a slender, elongated three-lateral prism in which the satellite main body was formed from the first and second base faces 11 and 12 and the first, second, and third lateral faces 13, 14, and 15 which corresponded to the three lateral faces of the three-faced prism. However, the present embodiment is not limited to such embodiments and the main body 10 may comprise more than three lateral sides, for example, as shown in **Fig. 10** in which further lateral faces 16 are arranged respectively in between the first, second, and third lateral faces 13, 14, and 15. Nevertheless, the first, second and third lateral faces 13, 14, and 15 are preferably arranged in relation to each other such that a bisecting plane extending between two of the first, second and third lateral faces 13, 14, and 15 intersects the remaining third of the first, second and third lateral faces 13, 14, and 15.

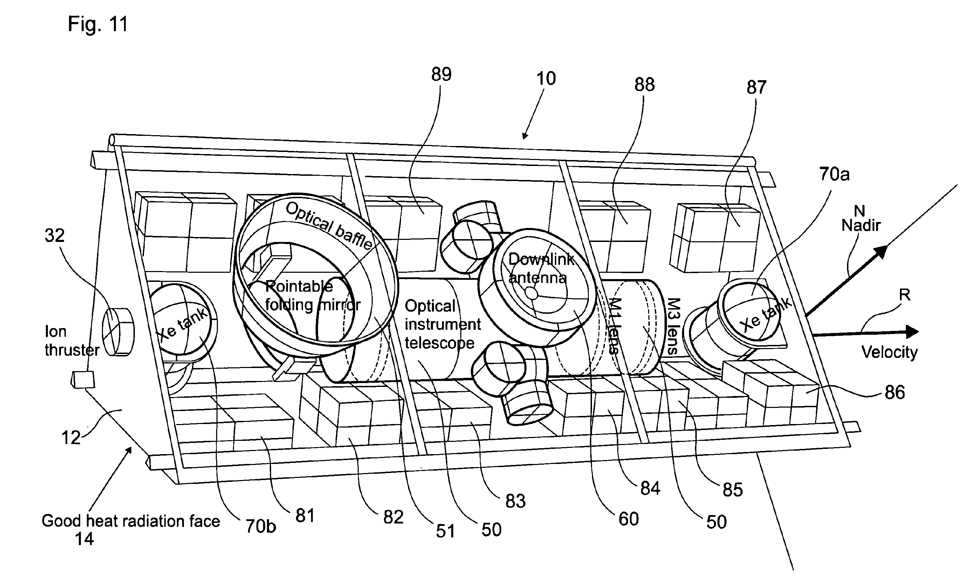

**Fig. 11** shows an exemplary schematic partially transparent perspective view of an instrument configuration of an Earth observation satellite according to an embodiment of the present invention. In this embodiment, the first and second propulsion means 31 and 32 are embodied by Xe ion thrusters arranged on each of the first and second lateral faces 11 and 12. In the satellite main body 10, on inner sides of the first and second base faces 11 and 12, small Xe tanks 70a and 70b are provided for supplying the ion thrusters with Xe ions. The ion thrusters can be conveniently supplied with electric energy by means of the solar array. Arranged on the third lateral face 15, there is provided an optical baffle of the Earth observation means 40 and a downlink antenna 60 for communications to one or more base stations, e.g., for transmitting observation data collected by the observation means 40 down to Earth. The satellite main body 10 provides enough space for the observational instruments such as the optical telescope 50, further electronics boxes (e.g. instruments 81 to 89) and it carries two Xenon tanks 70a and 70b e.g. with a total volume of around 60 litters. The ion thrusters 31, 32 for orbit maintenance and compensating air-drag can use the Xenon as propellant.

In **Fig. 11**, for illustrative purposes, the third lateral face 15 is drawn transparent to show the interior instrument configuration. An elongated optical telescope 50 is disposed inside the satellite main body 10 with its optical axis arranged substantially in parallel with the roll axis R of the satellite main body 10. Furthermore, plural further instruments and control means are attached to inner sides of the lateral faces 13 and 14, e.g. instruments 81 to 89. The size of the lateral face 15 can be as small as 1m to 4m in the pitch axis direction by 3m to 12m in the roll axis direction, e.g. about 1,5m to 2m in the pitch axis direction by 3 to 5 m in the roll axis direction. Alternatively to the optical baffle 51 and the optical telescope 50 or in addition thereto, the lateral face 15 can be also equipped with a flat planar SAR array, such as e.g. a 1,5m by 3m flat planar SAR array or a 2 by 4m flat planar SAR array. Then, SAR central electronic instruments would be accommodated in the satellite main body 10.

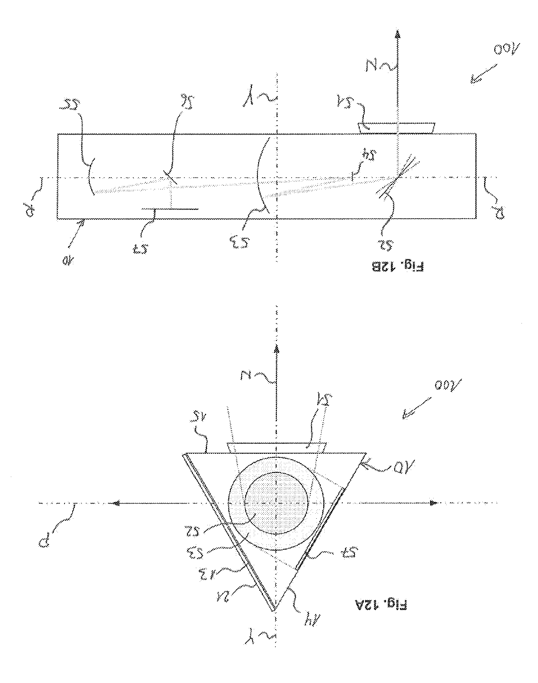

**Fig. 12A** shows an exemplary schematic cross-sectional view of the Earth observation satellite according to a fifth embodiment of the present invention, the cross-sectional view being perpendicular to a satellite roll axis, and **Fig. 12B** shows an exemplary schematic cross-sectional view of the Earth observation satellite according to the fifth embodiment of the present invention, the cross-sectional view being perpendicular to a satellite pitch axis. The satellite comprises reflecting optical telescope 50 being arranged inside the satellite main body 10 such that the optical axis of the telescope 50 extending in the direction of the roll axis R of the satellite so as to efficiently obtain a large focal length for high spatial resolutions by at the same time compact and efficient accommodation in the satellite main body 10.

The telescope 50 comprises a primary curved mirror 53 and a secondary curved mirror 55, both being arranged along the optical axis of the telescope 50, i.e., along the roll axis R of the satellite main body 10. A first folding mirror 52 is arranged within the optical axis at the position of the optical baffle 51 for reflecting light which enters through the optical baffle 51 into a direction of the optical axis of the telescope 50 to the primary curved mirror 53 as indicated by the grey line in **Fig. 12****B.** The light is then reflected to an intermediate mirror 54 which reflects the light to the secondary curved mirror 55. The light is then reflected from the secondary curved mirror 55 to a second folding mirror 56 that is configured to reflect the light coming from the secondary curved mirror 55 to the focal plane 57 of the optical telescope 50 which may be conveniently equipped with a CCD means for collecting image data. The focal plane of the telescope is over the side of the satellite looking to the cold dark space allowing efficient cooling and increasing performance of the detectors

The exemplary solution chosen for the optical telescope 50 is a Korsch-type telescope. To accommodate the instrument better along its shape, it is more advantageous not to put the second folding mirror 56 between mirrors 54 and 55 as in typical Korsch-type telescopes but between the curved mirror 55 and the focal plane 57. This will have mirrors 53, 54 and 55 in line and along the roll axis making optimal use of the long length of the elongated satellite body shape. The folding mirror 56 will allow locating the focal plane 57 very close and flat against the radiator face 14 (second lateral face 14 which may be equipped with a radiator means) of the satellite main body 10. This will further optimize the thermal control of the focal plane 57.

In order to improve the available observation angle, the first folding mirror 52 can be rotatably adjusted about the pitch axis P as illustrated in **Fig. 12****B.** In addition, the folding mirror can be also rotatably adjustable about the roll axis R or the yaw axis Y. Generally, rotatability about two perpendicular axes is absolutely sufficient to provide complete free orientation capability since the tow angular degrees of freedom can be conveniently adjusted. Rotatability about three perpendicular axes would provide redundancy.

According the above embodiment, high optical spatial resolution can be achieved in a compact configuration due to the fact that the focal length is increased by a plurality of mirrors arranged in the roll axis R of the satellite which provides sufficient space due to the slender elongated shape in the roll axis direction.

Accordingly, the proposed satellite configuration is also very adequate to accommodate an optical telescope. In the above embodiment, the telescope is located inside the slender-shaped elongated satellite main body (prism or also parallepiped shaped) and with the telescope axis being arranged along the roll axis R of the satellite. This allows the efficient accommodation of large diameter mirrors and of long focal length telescopes as required by high-resolution missions. Nevertheless the instrument can be provided with a 45° folding mirror to transform the instrument line of sight from velocity looking (roll axis direction) to Nadir looking (yaw axis direction or at least approximately yaw axis direction in side looking roll positions of the satellite). It is also possible to provide along track agility of the line of sight by rotating the folding mirror. The across track agility can be provided by across track (around velocity axis) rolling of the whole satellite. The roll axis of the satellite is of minimum inertia and maximum stiffness and it will be simple to provide high across track agility.

In the following, two possible examples for satellite system constellations in orbit will be described. The exemplary constellations will be made of two orthogonal orbital planes: one has a local time at 9:00 ascending and the other one at 15:00 ascending. In one approach the anomalies of the 4 satellites at 9:00 are located: 0, 90, 180 and 270°. The anomalies of the 4 satellites at 15:00 are located at: 45, 135, 225 and 315. This way the satellites tracks in the two orbital planes interleaves each other. In a second possible constellation, even better performances for the revisit can be provided. This second possibility is to have the satellites of the first orbital plane located at 0, 45, 90 and 135° and the satellites of the second orbital plane located at 180, 225, 270 and 315°. This way the satellites of each orbital plane arrive as a train: one after another. In both possibilities the daily orbital tracks are identical but the revisit patterns are different. In both constellation approaches the nominal area of regards of all instruments —SAR and optical— can be arranged to ensure optimal coverage and revisit.

In summary, the satellite configuration according to the present invention may consist of a slender parallelepiped main body of three-lateral symmetry. The satellite central body may have attached one or two of a pair of longitudinal solar array winglets, which may be added if required by mission power needs. The canting angle of these solar array winglets can be seasonally adjusted for optimal solar energy production. This will allow the same configuration to be adequate for launching to orbits with widely changing solar aspect angle or for widely different Sun-Synchronous orbits. The three-faced symmetry allows dedicating one face of the satellite to power production, another for instruments accommodation and the last one for electronics equipment location and for heat radiation. This approach provides that one side of the satellite can always protected from the Sun; that means the configuration is most convenient if the mission allows yaw flip manoeuvres. The proposed geometry allows optimal accommodation for optical system of long focal length; as required by high-resolution observations. The configuration is also adequate for the accommodation of large size flat planar array SAR. The slender configuration and the short deployable winglets allow a stiff satellite providing maximum pointing agility around roll. The characteristics of this technical solution will be explained in detail in the next sections

Summarizing the above, the present invention advantageously enables to provide an improved Earth observation satellite concept and an improved Earth observation system concept which allows for fast, efficient and reliable Earth observation capabilities, in particular, which allows providing - at lowered costs and at the same time - high spatial resolution capabilities and fast revisit capabilities.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Numerals

- 100: Earth observation satellite
- 100': Earth observation satellite
- 100a to 100l: Earth observation satellites

- 10: satellite main body
- 11: first base face of the satellite main body
- 12: second base face of the satellite main body
- 13: first lateral face of the satellite main body
- 14: second lateral face of the satellite main body
- 15: third lateral face of the satellite main body
- 16: other lateral faces of the satellite main body

- R: roll axis of the satellite
- Y: yaw axis of the satellite
- P: pitch axis of the satellite

- 20: solar array
- 21: first solar panel of the solar array
- 21a: first lateral side of the first solar panel
- 21b: second lateral side of the first solar panel
- 22: second solar panel of the solar array
- 22a: lateral side of the second solar panel
- 23: third solar panel of the solar array
- 23a: lateral side of the third solar panel
- 24a: first pivot joint
- 24b: second pivot joint

- C1: first canting axis of the solar array
- C2: second canting axis of the solar array

- 31: first propulsion means
- 32: second propulsion means
- 40: Earth observation means
- 50: optical telescope
- 51: optical baffle of the telescope
- 52: first folding mirror of the telescope
- 53: first curved mirror of the telescope
- 54: intermediate mirror of the telescope
- 55: second curved mirror of the telescope
- 56: second folding mirror of the telescope
- 57: focal plane of the telescope

- 60: downlink antenna
- 70a: first Xe tank
- 70b: second Xe tank

- 81 to 89: satellite instruments
- 200: launching space vehicle
- 201: storage bay of the launching space vehicle
- 202: nose cone of the launching space vehicle
- Rsv: roll axis of the launching space vehicle

## Claims

1. An Earth observation satellite, comprising:
a satellite main body (10) having an elongated shape extending in the direction of a roll axis (R) of the satellite (100; 100') from a first base face (11) of the satellite main body (10) to a second base face (12) of the satellite main body (10), the satellite main body (10) having a plurality of lateral faces (13, 14, 15, 16) extending from the first base face (11) to the second base face (12),
a solar array (20), and
first propulsion means (31) for compensating air-drag being arranged on the first base face (11) of the satellite main body (10),
wherein:
a first solar panel (21) of the solar array (20) is mounted on a first lateral face (13) of the satellite main body (10),
a second lateral face (14) of the satellite main body (10) is configured to radiate heat away from the satellite main body (10), and
a third lateral face (15) of the satellite main body (10) has observation means (40) for Earth observations.

2. Satellite according to claim 1, **characterized by** further comprising second propulsion means (32) for compensating air-drag being arranged on the second base face (12) of the satellite main body (10).

3. Satellite according to claim 2, **characterized by** further comprising propulsion means for performing a yaw flip of the satellite main body (10) about a yaw axis (Y) of the satellite (100; 100').

4. Satellite according to at least one of claims 2 to 3, **characterized in that** the first and/or second propulsion means (31; 32) for compensating air-drag comprise ion thruster devices which are supplied with electrical energy by means of the solar array (20).

5. Satellite according to at least one of the preceding claims, **characterized in that** the first solar panel (21) is fixedly attached to the first lateral face (13) of the satellite main body (10) and has a first lateral side (21a) extending in the direction of the roll axis (R) of the satellite (100; 100'), wherein the solar array (20) comprises a second solar panel (22) being attached with a lateral side (22a) thereof to the satellite main body (10) or the first solar panel (21) along the first lateral side (21a) of the first solar panel (21).

6. Satellite according to claim 5, **characterized in that** the second solar panel (22) is a single degree of freedom adjustable solar panel so that a canting angle of the second solar panel (22) relative to the first solar panel (21) is continuously adjustable according to the single degree of freedom about an axis extending along the first lateral side (21a) of the first solar panel (21).

7. Satellite according to claim 5 or 6, **characterized in that** the first solar panel (21) has a second lateral side (21b) extending in the direction of the roll axis (R) of the satellite (100), wherein the solar array (20) comprises a third solar panel (23) being attached with a lateral side (23a) thereof to the satellite main body (10) or the first solar panel (21) along the second lateral side (21b) of the first solar panel (21).

8. Satellite according to claim 7, **characterized in that** the third solar panel (23) is a single degree of freedom adjustable solar panel so that a canting angle of the third solar panel (23) relative to the first solar panel (21) is continuously adjustable according to the single degree of freedom about an axis extending along the second lateral side (21b) of the first solar panel (21).

9. Satellite according to at least one of the preceding claims, **characterized in that** the satellite main body (10) substantially has an elongated prism shape formed from the first and second base faces (11, 12) and the plurality of laterally arranged lateral faces (13, 14, 15, 16).

10. Satellite according to at least one of the preceding claims, **characterized in that** the satellite main body (10) substantially has an elongated three-faced prism shape formed from the first and second base faces (11, 12) and the laterally arranged first, second and third lateral faces (13, 14, 15).

11. Satellite according to at least one of the preceding claims, **characterized in that** the observation means (40) for Earth observations comprises a Synthetic Aperture Radar device and/or a high-resolution optical observation device.

12. Satellite according to at least one of the preceding claims, **characterized in that** the observation means (40) for Earth observations comprises a planar Synthetic Aperture Radar array arranged on the third lateral face (15) of the satellite main body (10).

13. Satellite according to at least one of the preceding claims, **characterized by** further comprising an optical telescope (50) disposed in the satellite main body (10), wherein the observation means (40) for Earth observations arranged on the third lateral face (15) of the satellite main body (10) comprises an optical baffle (51) of the optical telescope (50).

14. Satellite according to claim 13, **characterized in that**
the optical telescope (50) is a reflecting optical telescope having an optical axis extending in the direction of the roll axis (R) of the satellite (100; 100'), comprising:
- one or more curved mirrors (53, 55) arranged along the optical axis of the telescope (50),
- a first folding mirror (52) for reflecting light which enters through the optical baffle (51) into a direction of the optical axis of the telescope (50), and
- a second folding mirror (56) for reflecting light from the optical axis to a focal plane (57) of the optical telescope (50); or
the optical telescope (50) is a refracting optical telescope having an optical axis extending in the direction of the roll axis (R) of the satellite (100; 100'), comprising:
- one or more optical lenses arranged along the optical axis of the telescope (50),
- a first folding mirror for reflecting light which enters through the optical baffle into a direction of the optical axis of the telescope (50), and
- a second folding mirror for reflecting light from the optical axis to a focal plane of the optical telescope (50).

15. Satellite according to claim 14, **characterized in that** the first folding mirror (52) is rotatably adjustable about a pitch axis (P), which extends perpendicular to the roll axis (R) of the satellite (100) and perpendicular to a yaw axis (Y) of the satellite (100; 100'), of the satellite (100; 100'), about the yaw axis (Y) of the satellite (100; 100') and/or about the roll axis (R) of the satellite (100; 100').

16. Satellite according to at least one of the preceding claims, **characterized by** further comprising propulsion means for performing a roll maneuver of the satellite main body (10) about the roll axis (R) of the satellite (100; 100').

17. Earth observation satellite system comprising a plurality of Earth observation satellites (100; 100'; 100a - 1001) according to at least one of the preceding claims.

18. System according to claim 19, **characterized in that** the satellites (100; 100'; 100a - 1001) are orbiting Earth in one or more Low Earth Orbits, in particular in Low Earth Orbits having altitudes below 500 km, in particular below 300 km.

19. Launching system for launching satellites into one or more Earth orbits, comprising a launching space vehicle (200) and a plurality of Earth observation satellites (100; 100'; 100a - 1001) according to at least one of claims 1 to 16, the plurality of satellites (100; 100'; 100a - 1001) being accommodated in the space vehicle (200) such that the roll axes (R) of the satellites (100; 100'; 100a - 1001) are arranged substantially in parallel to each other and substantially in parallel to the roll axis (Rsv) of the space vehicle (200).
